(19) Europäisches Patentamt
European Patent Office
Office européen des brevets

(11) Veröffentlichungsnummer: **0 148 125**
**B1**

(12) **EUROPÄISCHE PATENTSCHRIFT**

(45) Veröffentlichungstag der Patentschrift: **23.09.87**

(51) Int. Cl.⁴: **C 09 B 67/42,** C 09 B 67/28, D 06 P 1/651, C 09 B 67/46

(21) Anmeldenummer: **84810628.2**

(22) Anmeldetag: **17.12.84**

(54) **Feste Präparate von in Wasser schwerlöslichen bis unlöslichen Farbstoffen.**

(30) Priorität: **21.12.83 CH 6796/83**

(43) Veröffentlichungstag der Anmeldung: **10.07.85 Patentblatt 85/28**

(45) Bekanntmachung des Hinweises auf die Patenterteilung: **23.09.87 Patentblatt 87/39**

(84) Benannte Vertragsstaaten: **BE CH DE FR GB IT LI**

(56) Entgegenhaltungen:
**DE-C-1 290 521**
**FR-A-804 300**
**FR-A-2 182 191**
**GB-A-972 005**

(73) Patentinhaber: **CIBA- GEIGY AG, Klybeckstrasse 141, CH- 4002 Basel (CH)**

(72) Erfinder: **Hugelshofer, Paul, Dr., Donnerbaumstrasse 29, CH- 4132 Muttenz (CH)**

**EP 0 148 125 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft feste Präparate von in Wasser schwerlöslichen bis unlöslichen Farbstoffen, ein Verfahren zu deren Herstellung, sowie deren Verwendung zum Färben und Bedrucken von natürlichem oder synthetischem Fesermaterial.

Feste Präparate von in Wasser schwerlöslichen bis unlöslieben Farbstoffen sind bekannt. Diese enthalten neben dem Farbstoff üblicherweise ein Dispergiermittel oder Dispergiermittelgemisch, sowie weitere Zusätze wie z. B. Coupagemittel, Netzmittel usw. Als Dispergiermittel werden vielfach anionische Dispergiermittel verwendet, z.T. auch im Gemisch mit nichtionischen Dispergatoren.

An feste Farbstoffpräparate werden heute im Hinblick auf eine rationelle Arbetsweise und weitgehend automatisierte Färbeverfahren eine ganze Reihe der unterschiedlichsten Anforderungen gestellt. So wird von einer Pulver- bzw. Granulat-Handelsform verlangt, dass diese ein gutes Anschlämmverhalten zeigt, d.h. sich in möglichst kurzer Zeit, ohne Klumpen- oder Knollenbildung mit kaltem Wasser anteigen oder anrühren lässt. Ferner ist eine gute Redispergierbarkeit ein wichtiges Kriterium, danach soll das Präparat nicht nur gut benetzbar sein, sondern der Dispersitätsgrad des in Wasser suspendierten Farbstoffs soll möglichst übereinstimmen mit der, am Ende der vorangegangenen Mahlung erreichten Feinverteilung. Zudem soll die Dispersionsstabilität in kalter und heisser Färbeflotte gewährleistet sein, d.h. es darf kein Abfall des Dispersitätsgrades durch Agglomeration, Aggregation oder Kristallisation eintreten. Darüber hinaus sollte die Klotz- bzw. Färbeflotte eine moglichst geringe Schaumbildung zeigen.

Um all diese Kriterien zu erfüllen, genügt es nicht, den Farbstoff lediglich in Gegenwart eines anionischen Dispergiermittels, wie z. B. einem Ligninsulfonat zu mahlen und anschliessend die wässrige Dispersion zu trocknen. Das auf diese Weise erhaltene Präparat mag wohl eine hinreichende Dispersionsstabilität zeigen, wird jedoch hinsichtlich der Benetzbarkeit und des Schaumverhaltens nicht den gestellten Anforderungen genügen.

Aufgabe der vorliegenden Erfindung war es somit, ein festes Farbstoffpräparat herzustellen, das möglichst umfassend die eingangs genannten Eigenschaften aufweist.

Gefunden wurde, dass zur Mahlung und Dispergierung wasserunlöslicher bis schwerlöslicher Farbstoffe ein anionisches Dispergiermittel oder ein Dispergiermittelgemisch nach wie vor erforderlich ist. Um zudem das Anschlämmverhalten und die Benetzbarkeit zu verbessern, hat sich überraschenderweise der Zusatz eines Dialkylsulfosuccinats bzw. eines Alkylnaphthalinsulfonats und/oder eines Acetylen-Glykols als äusserst wirksam erwiesen, ohne dass dadurch das Schaumverhalten der Klotz- bzw. Färbeflotte nachteilig beeinflusst wird. Im Gegenteil, gerade das Acetylen-Glykol weist zudem eine deutlich entschäumende Wirkung auf.

Gegenstand der Erfindung sind somit feste Präparate von in Wasser schwerlöslichen bis unlöslichen Farbstoffen, welche dadurch gekennzeichnet sind. dass diese neben dem Farbstoff und einem oder mehreren anionischen Dispergiermitteln, sowie gegebenenfalls weiteren, in pulverförmigen Zubereitungen üblicherweise enthaltenen Mitteln, ein Dialkylsulfosuccinat, dessen Alkylgruppen 3 bis 8 Kohlenstoffatome aufweisen. oder ein Alkyl-($C_3$ bis $C_6$)-naphthalinsulfonat und/oder ein verzweigtes oder unverzweigtes Acetylen-Glykol mit 8 bis 20 Kohlenstoffatomen enthalten.

Mit der Formulierung, "in Wasser schwerlösliche bis unlösliche Farbstoffe", sind solche gemeint, die bei einer Temperatur von 20°C eine Wasserlöslichkeit von weniger als 1 g/l aufweisen. Es handelt sich koloristisch gesehen, z. B. um Schwefelfarbstoffe oder Pigmentfarbstoffe, vor allem jedoch um Dispersions- und in erster Linie um Küpenfarbstoffe, die chemisch den verschiedensten Klassen angehören.

Bei den Dispersionsfarbstoffen handelt es sich beispielsweise um von Carbon- und/oder Sulfonsäuregruppen freie Nitro-, Aminoketon-, Ketonimin-, Methin-, Polymethin-, Diphenylamin-, Chinolin-, Benzimidazol-, Xanthen-, Oxazin-, Aminonaphthochinon- oder Cumarinfarbstoffe und insbesondere um Anthrachinon- und Azofarbstoffe, wie Mono- oder Disazofarbstoffe. Bei den Küpenfarbstoffen handelt es sich um Farbstoffe, die in fester, dispergierter Form auf das Gewebe aufgebracht werden und nach dem Entwickeln wieder in wasserunlöslicher Form vorliegen.

Als Beispiele von verküpbaren polycyclischen Chinonen seien die folgenden erwähnt:

Perylentetracarbonsäureimide, vor allem die Phenylimide, Anthrapyrimidine, Anthrapyridone, Isothiazolanthrone, Chinazolinanthrachinone, Oxazolanthrachinone, Thiazolanthrachinone, Oxdiazolanthrachinone, Anthrachinonyltriazole, Pyrazolanthrachinone, Dipyrazolanthronyle, Pyrazinoanthrachinone, Azabenzanthrone, Indanthrone, Thioxanthonanthrachinone, Anthrimide, Anthrimidcarbazole, Dihydroacridine, Anthanthrone, Pyranthrone, Flavanthrone, Acedianthrone und insbesondere Anthrachinonacridone und die Anthrachinone selber, worunter nicht nur Derivate mit reinen 9,10-Dioxoanthracenringen zu verstehen sind, sondern auch solche mit Thiophanthronresten und dergl. sowie Anthrachinonverbindungen. die 9,10-Dioxoanthracenringe aufweisen. All diese Polycyclen können die für Küpenfarbstoffe üblichen Substituenten tragen. Solche Substituenten sind beispielsweise: Halogenatome. insbesondere Chlor, Fluor oder Brom, Alkyl-, Alkoxy-, Aryl-, Aryloxy-, Aralkyl-, Aralkoxy-, Carbalkoxy-, Arylamino-, Alkylmercapto-, Arylmercapto-, Cyano- und Thiocyanogruppen. Mit Alkyl sind insbesondere Reste mit 1 bis 4 Kohlenstoffatomen gemeint, mit Aryl insbesondere Reste wie Phenyl-, Toluyl-, Chlorphenyl-, Methoxyphenyl- oder Naphthylreste und mit Aralkyl insbesondere der Benzylrest. Besonders wichtige Substituenten sind ausserdem die Acyl- und die Acylaminogruppe.

Die erfindungsgemässen Präparate können neben Einzelfarbstoffen auch Farbstoffmischungen enthalten, wobei es sich auch um Kombinationen von in Wasser unlöslichen bzw. schwerlöslichen Farbstoffen mit

wasserlöslichen Farbstoffen handeln kann, sofern Mischgewebe z. B. aus Polyester/Baumwolle gefärbt werden soll.

Als anionaktive Dispergiermittel kommen vor allem Ligninsulfonate in Betracht, z. B. solche, die nach dem Sulfit- oder Kraft-Verfahren gewonnen werden. Vorzugsweise handelt es sich um Produkte, die z.T. hydrolysiert, oxidiert oder desulfoniert bzw. im Fall des Kraft-Verfahrens nachsulfoniert oder sulfomethyliert und nach bekannten Verfahren fraktioniert werden z. B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1000 und 80'000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren. Das Verhältnis von Kohlenstoff zu organisch gebundenem Schwefel liegt beispielsweise zwischen 9:1 und 55:1.

Bevorzugt werden solche Ligninsulfonate verwandt, die ein Verhältnis von Kohlenstoff zu organisch gebundenem Schwefel von 17:1 bis 40:1 aufweisen.

Als brauchbare anionaktive Dispergiermittel für die erfindungsgemässen Präparate haben sich ausserdem Kondensationsprodukte von aromatischen Sulfonsäuren mit Formaldehyd, insbesondere Kondensationsprodukte aus Formaldehyd und Naphthalinsulfonsäuren erwiesen. Wirksam sind ferner Kondensationsprodukte aus Formaldehyd, Naphthalinsulfonsäure und Benzolsulfonsäure, oder aus Rohkresol, Formaldehyd und Naphthalinsulfonsäure. Genannt sind ausserdem sulfatierte Alkylenoxidaddukte, sulfatierte, partiell veresterte mehrwertige Alkohole, Alkylsulfonate, Kondensationsprodukte aus Ditolyläther, Formaldehyd und Schwefelsäure, Kondensationsprodukte aus chlormethylolierten Diphenylen, Naphthalin und Schwefelsäure, aus einkernigen aromatischen Verbindungen, Formaldehyd, Naphtholsulfonsäuren und gegebenenfalls Natriumsulfit oder Kondensationsprodukte aus Naphthalin, Toluol, Formaldehyd und Schwefelsäure.

Bevorzugt werden Gemische der genannten anionischen Dispergiermittel angewandt, insbesondere ein Gemisch aus Naphthalinsulfonsäure-Formaldehydkondensat, und/oder Ligninsulfonat und/oder Oxyligninsulfonat.

Normalerweise liegen die anionischen Dispergiermittel in Form ihrer Alkalisalze, ihrer Ammoniumsalze oder ihrer wasserlöslichen Aminsalze vor.

Als Dialkylsulfosuccinate, deren Alkylgruppen geradkettig oder verzweigt sind und 3 bis 8 Kohlenstoffatome aufweisen, sind z. B. die folgenden genannt: Dipropylsulfosuccinat, Di-iso-propylsulfosuccinat, Di-isobutylsulfosuccinat, Dipentylsulfosuccinat, Dihexylsulfosuccinat, Diheptylsulfosuccinat, Bis-2-äthyl-hexylsulfosuccinat und Dioctylsulfosuccinat. Bevorzugt von diesen ist das Dipentyl- und insbesondere das Dihexylsulfosuccinat und das Bis-2-äthyl-hexylsulfosuccinat.

Anstelle eines Dialkylsulfosuccinats kann auch ein Alkylnaphthalinsulfonat verwendet werden, dessen Alkylrest eine Kettenlänge von 3 bis 6 Kohlenstoffatomen aufweist und verzweigt oder unverzweigt ist. In Frage kommt beispielsweise das Isopropylnaphthalinsulfonat.

Sowohl das Dialkylsulfosuccinat, als auch das Alkylnaphthalinsulfonat werden zweckmässigerweise in Form ihrer Alkalimetallsalze, z. B. als Natriumsalz eingesetzt.

Als besonders vorteilhaft haben sich jedoch Acetylen-Glykole mit insgesamt 8 bis 20 Kohlenstoffatomen im Kohlenstoffgerüst und einer vorzugsweise mittelständig angeordneten Dreifachbindung erwiesen. Derartige Verbindungen, die zur Gruppe der nichtionischen Tenside gehören, sind trotz ihrer hervorragenden Netzwirkung relativ schaumarm und erniedrigen zudem deutlich die Viskosität des Mahlslurrys. Dadurch ist es möglich, die Nassmahlung mit Farbstoffsuspensionen hohen Feststoffgehalts durchzuführen. Die Farbstoffsuspension bleibt auch während der Mahlung dünnflüssig und lässt sich am Ende des Mahlprozesses problemlos in den Trockenturm eindüsen, wobei aufgrund des hohen Feststoffgehalts weniger Wasser verdampft werden muss. Damit bringt der Zusatz an Acetylen-Glykol eine bessere Auslastung der Mahlkapazität, also eine bessere Raum-Zeit-Ausbeute und eine deutliche Energieeinsparung in der Trockenstufe.

Bei den Acetylen-Glykolen handelt es sich beispielsweise um die folgenden Verbindungen: 4-Octin-3,6-diol, 2,7-Dimethyl-4-octin-3,6-diol, 3,6-Dimethyl-4-octin-3,6-diol, 5-Deci-n-4,7-diol, 2,9-Dimethyl-5-decin-4,7-diol, 4,7-Dimethyl-5-decin-4,7-diol, 2,4,7,9-Tetramethyl-5-decin-4,7-diol oder 2,5,8,11-Tetramethyl-6-dodecin-5,8-diol. Bevorzugt sind die verzweigten Acetylen-Glykole, insbesondere das 2,4,7,9-Tetramethyl-5-decin-4,7-diol und das 3,6-Dimethyl-4-octin-3,6-diol.

Das Acetylen-Glykol kann in Kombination mit dem Dialkylsulfosuccinat bzw. dem Alkylnaphthalinsulfonat verwendet werden. Vielfach erzielt man jedoch bereits eine ausreichende Wirkung bei Verwendung des Acetylen-Glykols allein. Bevorzugte Farbstoffpräparate enthalten demnach neben Farbstoff, einem Naphthalinsulfonsäure-Formaldehydkondensat und/oder einem Ligninsulfonat und/oder einem Oxyligninsulfonat, sowie gegebenenfalls weiteren Zusätzen einen zweiwertigen, verzweigten Acetylenalkohol mit 8 bis 12 Kohlenstoffatomen.

Ferner erhält man Präparate mit gutem Anschlämm- und Netzverhalten wenn man als Hilfsmittel ein Dialkylsulfosuccinat mit 3 bis 8 Kohlenstoffatomen im Alkylrest verwendet in Kombination mit gegebenenfalls weiteren Zusätzen und zusammen mit einem Naphthalinsulfonsäure-Formaldehydkondensat und/oder einem Ligninsulfonat und/oder einem Oxyligninsulfonat.

Dialkylsulfosuccinat und Alkylnaphthalinsulfonat werden den erfindungsgemässen Präparaten vorteilhaft in einer Menge von 1 bis 15 Gew.%, insbesondere 3 bis 8 Gew.%, und die Acetylen-Glykole in einer Menge von

0,5 bis 12 Gew.%, insbesondere 3 bis 6 Gew.%, zugesetzt, jeweils bezogen auf das Gesamtgewicht des fertigen Präparats.

Als weitere Zusätze können die Präparate noch z. B. Antischaummittel beispielsweise auf Basis höherer Alkohole oder Mineralölbasis, ferner Füllstoffe, wie etwa Natriumsulfat, Glucose oder Dextrin und/oder Staubbindemittel z. B. auf Mineralölbasis enthalten.

Die Farbstoffpräparate haben beispielsweise die folgende Zusammensetzung:

25 bis 65 Gew.% Farbstoff,
20 bis 60 Gew.% Gemisch anionischer Dispergatoren,
1 bis 15 Gew.% Dialkylsulfosuccinat und/oder
0,5 bis 12 Gew.% Acetylen-Glykol, sowie gegebenenfalls
0,1 bis 20 Gew.% weitere Zusätze.

Die erfindungsgemässen Präparate weisen zusammenfassend eine geringe Schaumbildung in Wasser auf, besitzen ein sehr gutes Anschlämmverhalten und eine sehr gute Redispergierbarkeit und weisen zudem in Farbebädern eine gute Dispersionsstabilität auf.

Die Herstellung der Farbstoffpräparate erfolgt beispielsweise dadurch, dass man den in Wasser schwerlöslichen bis unlöslichen Farbstoff unter Zusatz eines oder mehrerer anionischer Dispergiermittel in Wasser suspendiert und einer Nassmahlung unterwirft, bis die mittlere Teilchengrösse bei $\leqslant$ 5 µm liegt. Die Nassmahlung erfolgt beispielsweise in einer Rührwerks-Kugelmühle oder einer Sandmühle.

Anschliessend wird die so erhaltene Farbstoffdispersion getrocknet, wobei die restlichen Komponenten, etwa noch weiterer anionischer Dispergator, wie z. B. Ligninsulfonat, das auch als Füllstoff zugegeben wird, und vor allem das Dialkylsulfosuccinat, Alkylnaphthalinsulfonat bzw. Acetylen-Glykol vor dem Trocknen zugesetzt oder aber bereits vor bzw. während dem Mahlprozess in die Feststoffsuspension gegeben werden. Insbesondere das Acetylen-Glykol wird zur Viskositätserniedrigung bevorzugt bereits in den Mahlslurry gegeben.

Geeignete Trocknungsaggregate sind Sprühtrockner, Wirbelschichtgranulierapparate, Dünnschichtkontakttrockner, wie z. B. Walzentrockner oder auch kontinuierlich arbeitende Schaufeltrockner. Bevorzugt wird der Farbstoffdispersion mit Hilfe eines Sprühtrockners das Wasser bis auf einen geringen Gehalt an Restfeuchte entzogen.

Zur Sprühtrocknung oder auch Sprühgranulierung wird die hilfsmittelhaltige Farbstoffdispersion über eine zur Erzeugung von Tropfen gewünschter Grösse geeignete Vorrichtung (z. B. Düse, Zertropfer, Schwinger oder rotierende Scheibe) in den Trockner eingegeben. Die Gaseingangstemperatur des Trockners liegt bei ca. 130-200°C, die Gasausgangstemperatur bei 60 bis 110°C. Die Trocknung wird so gestaltet, dass die Produkttemperatur nicht über einen spezifischen kritischen Grenzwert steigt, oberhalb dessen das Farbstoffgranulat irreversible Veränderungen erleidet. Insbesondere ist darauf zu achten, dass es nicht zur Agglomerierung der Farbstoffteilchen kommt, das würde bedeuten, dass der Dispersitätsgrad des in Wasser angeschlämmten Präparats deutlich geringer ist, als der vor der Trocknung.

Verwendung finden die erfindungsgemässen Farbstoffpräparate zur Herstellung von Färbebädern, Klotzflotten oder Druckpasten. Diese eignen sich zum Färben und Bedrucken von natürlichen oder synthetischen Fasermaterialien z. B. Textilmaterial aus Baumwolle, Polyester oder Viscose sowie auch Mischgewebe aus Baumwolle und Polyester.

Die folgenden Beispiele dienen der Veranschaulichung der Erfindung; Teile bedeuten Gewichtsteile und Prozente Gewichtsprozente. Viskositäten wurden mit dem Brookfield Viskosimeter, Typ LVT bestimmt, bei 30 UpM unter Verwendung der Spindel 4.

Die Tests zur Bestimmung der Benetzbarkeit und des Schaumverhaltens der Präparate werden wie folgt durchgeführt:

**Mechanischer Test zur Beurteilung des Kalt-Dispergier- bzw. Lösevermögens (MKDL-Test)**

5 g Farbstoffgranulat oder Pulver werden auf einer perforierten Stahlscheibe aufgebracht, die mittels Hubmechanismus waagrecht in einem mit 50 ml demineralisiertem Wasser gefüllten 100 ml Becherglas gehalten wird. Die Stahlscheibe ist vom Durchmesser her so dimensioniert, dass sie knapp an die Wandung des Becherglases heranreicht. Das Wasser hat eine Temperatur von 25 bis 30°C. Man wartet 30 Sekunden bis sich das Farbstoffgranulat auf der eingetauchten Stahlscheibe abgesetzt hat und setzt dann den Hubmechanismus in Bewegung (30 Hub/min, oberer Totpunkt liegt über der Wasseroberfläche). Man beobachtet die Stahlscheibe und bestimmt die Zeitdauer, bis zu der kein Farbstoff mehr auf der Stahlscheibe zu erkennen ist.

Von den an Farbstoffgranulate gestellten Praxisanforderungen her gesehen, wird die Dispergierzeit wie folgt bewertet:

bis 5 Minuten : gut
5 bis 10 Minuten : mässig
> 10 minuten : schlecht.

Schaumtest

Das Schaumverhalten der Präparate wird bestimmt nach der Methode von A.N. Derbyshire und A.T. Leaver (JSDC 253, August 1975). Der Test wird bei einer Temperatur von 30°C durchgeführt. Die Schaumentwicklung wird durch Messen der Schaumhöhe nach 5-minütiger Zirkulation und die Schaumstabilität durch Bestimmen der Schaumhöhe nach weiteren 5 Minuten ohne Zirkulation beurteilt. Die so ermittelten Schaumhöhen werden in mm angegeben; als Wertepaar, durch einen Schrägstrich getrennt.

**Beispiel 1**

1620 Teile des getrockneten und vorzerkleinerten Farbstoffs der Formel

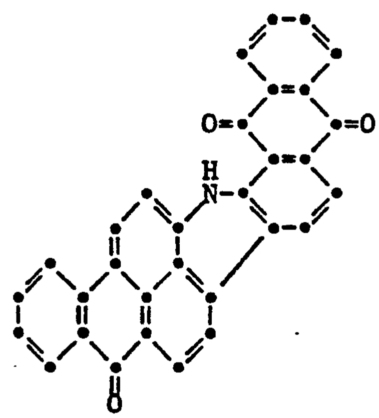

werden mit 944 Teilen eines Naphthalinsulfonsäure-Formaldehydkondensats (als 42,9 %ige wässrige Lösung) und 438 Teilen Oxyligninsulfonat (als Pulver mit einem Trockengehalt von 92,6 %) in 3000 Teilen Wasser mit Hilfe eines Homogenisiergeräts gründlich vermischt. Nach diesem Mischen/Vordispergieren sollte die Grösse der einzelnen Farbstoffteilen 80 µm nicht übersteigen. Durch Zusatz von ca. 92 Teilen konz. Schwefelsäure wird der pH-Wert der Suspension auf 7,6 eingestellt. Statt mit Schwefelsäure kann die pH-Wert-Einstellung auch mittels Naphthalinsulfonsäure-Formaldehydkondensat (als freie Säure) erfolgen.

Die etwas rahmige, dickflüssige Anrührung wird nun mit 30 Teilen 3,6-Dimethyl-4-octin-3,6-diol versetzt, was eine deutlich viskositätserniedrigende Wirkung hat. Die Anrührung wird sofort wesentlich dünnflüssiger.

Das Acetylen-Glykol wirkt somit als ausgezeichnetes Mahlhilfsmittel, wodurch der Feststoffgehalt des Mahlgutes deutlich erhöht werden kann. Ohne diese Substanz muss der Mahlansatz stark verdünnt werden (bis zu 20 %), was unwirtschaftlich ist (längere Mahldauer, geringere Raum-Zeit-Ausbeute, zudem muss beim Trocknen eine grosse Menge Wasser verdampft werden).

Die Nassmahlung des Farbstoffs erfolgt anschliessend in einer Rührwerks-Kugelmühle und wird nach ca. 13 Stunden bei einer mittleren Teilchengrösse von etwa 1 µm beendet. Der Mahlslurry bleibt bis zum Schluss dünnflüssig (Trockengehalt ca. 42 %). Vor dem Trocknen gibt man als Füllstoff noch 505 Teile Glukose zu. Die Trocknung erfolgt in einem Zerstäubungstrockner bei einer Lufteintrittstemperatur von max. 130 bis 140°C und einer Luftaustrittstemperatur von max. 70 bis 75°C.

Das in Form eines rieselfähigen, abriebfesten Granulats anfallende Farbstoffpräparat hat die folgende Zusammensetzung:

51,9 % Farbstoff,
13,0 % Naphthalinsulfonsäure-Formaldehydkondensat,
13,0 % Oxyligninsulfonat,
16,1 % Glukose,
1,0 g 3,6-Dimethyl-4-octin-3,6-diol,
5,0 g Restfeuchte.

Das Präparatr zeigt ein ausgezeichnetes Anschlämm- und Netzverhalten (MKDL-Test: 2 Min.) und führt in der Anwendung nur zu einer geringen Schaumbildung (Schaumtest: 20 mm/0 mm).

Anstelle der Glukose kann als Füllstoff auch ein Ligninsulfonat verwendet werden. Ferner erhält man ein Präparat mit gleich gutem Anschlämm- und Netzverhalten, wenn man anstelle von 3,6-Dimethyl-4-octin-3,6-diol

eines der folgenden Acetylen-Glykole verwendet: 2,4,7,9-Tetramethyl-5-decin-4,7-diol, 4,7-Dimethyl-5-decin-4,7-diol oder 2,9-Dimethyl-5-decin-4,7-diol.

Das Anschlämm- und Netzverhalten des Präparats lässt sich weiter verbessern, wenn man den Mahlslurry mit 2 bis 8 % (bezogen auf das fertige Präparat) an Dihexylsulfosuccinat-Na-Salz oder Isopropylnaphthalinsulfonat versetzt. Als weitere Zusätze kommen noch Antischaummittel (z. B. auf Paraffinöl-Basis) und Staubbindemittel in Frage, die in einer Menge von 0,2 bis 1,5 % zugesetzt werden. Bei einwandfreier Feingutabtrennung während oder nach dem Trocknungsprozess kann auf die Zugabe eines Staubbindemittels verzichtet werden.

**Beispiel 2**

300 Teile Mahlslurry der Zusammensetzung 24,4 % Farbstoff (gleicher Farbstoff wie in Beispiel 1), 6,1 % Naphthalinsulfonsäure-Formaldehydkondensat, 6,1 % Oxyligninsulfonat und 0,5 % 3,6-Dimethyl-4-octin-3,6-diol werden nach beendeter Mahlung (mittlere Teilchengrösse ca. 1 µm) mit 33,3 Teilen Ligninsulfonat (wässrige Lösung mit einem Trockengehalt von 46,4 %), 6,6 Teilen Dihexylsulfosuccinat-Na-Salz (80 %ig) und 7,3 Teilen Wasser versetzt und gut homogenisiert. Anschliessend lässt man den Mahlslurry durch ein Sieb der Maschenweite 24-26 µm laufen und trocknet in einem Zerstäubungstrockner, wobei für die Lufteintritts- und -austrittstemperatur die im Beispiel 1 angegebenen Maximalwerte eingehalten werden.

Man erhält ein rieselfähiges, abriebfestes Granulat der folgenden Zusammensetzung:

52,65 % Farbstoff,
13,15 % Naphthalinsulfonsäure-Formaldehydkondensat,
13,15 % Oxyligninsulfonat,
11,15 % Ligninsulfonat,
1,10 % 3,6-Dimethyl-4-octin-3,6-diol,
3,8 % Dihexylsulfosuccinat,
5,0 % Restfeuchte.

Das Präparat hat ausgezeichnete Anschlämm- und Netzeigenschaften (MKDL-Test: 3 Min.) und ist in der Anwendung schaumarm (Schaumtest: 50 mm/rasch abbauend).

Werden auf Kosten der Sulfitablauge dem Eindampfslurry 0,8 % Antischaummittel zugemischt so erhält man nach dem Trocknen ein praktisch schaumfreies Präparat, wobei jedoch die guten Anschlämm- und Netzeigenschaften voll erhalten bleiben.

**Beispiel 3**

672 Teile des in Beispiel 1 erwähnten Farbstoffs (salzhaltiger Rohfarbstoff) werden mit 168,4 Teilen Naphthalinsulfonsäure-Formaldehydkondensat (eingesetzt werden 393,5 Teile einer wässrigen Lösung mit einem Feststoffgehalt von 42,8 %), 168,3 Teilen Oxyligninsulfonat (als 92,9 %iges Pulver), 13,4 Teilen 3,6-Dimethyl-4-octin-3,6-diol und 1240 Teilen Wasser angerührt und vordispergiert, bis die Teilchengrösse bei < 80 bis 100 µm liegt. Durch Zugabe von 29,4 Teilen Schwefelsäure 96 %ig, wird der pH-Wert der Suspension auf 8,2 eingestellt. Die Suspension ist dünnflüssig und wird während 8 Stunden in einer Sandmühle gemahlen (Viskosität: 3640 cP). Die mittlere Teilchengrösse ist $\leqslant$ 1 µm. 508,7 Teile des Mahlgutes (41 % Feststoffgehalt) werden mit 24,7 Teilen Ligninsulfonat (56,3 Teile einer 43,9 %igen wässrigen Lösung), 13,8 Teilen Dihexylsulfosuccinat, 2,8 Teilen Antischaummittel und 43,4 Teilen Wasser gründlich vermischt. Nach Absieben von Grobanteil (Maschenweite 18 bis 21 µm) wird die Suspension sprühgetrocknet (Lufteintrittstemperatur: 130°C/Luftaustrittstemperatur: 60 bis 65°C). Das so erhaltene Farbstoffpräparat ist frei von Farbstoffagglomeraten - keine stippigen Färbungen - und hat die folgende Zusammensetzung:

51,49 % Farbstoff,
12,90 % Naphthalinsulfonsäure-Formaldehydkondensat,
12,9 % Oxyligninsulfonat,
9,45 % Ligninsulfonat,
1,03 % 3,6-Dimethyl-4-octin-3,6-diol,
4,22 % Dihexylsulfosuccinat,
3,14 % Natriumsulfat,
1,07 % Antischaummittel,
3,80 % Wasser.

Das Präparat hat eine gute Benetzbarkeit/Anschlämmbarkeit und Redispergierbarkeit und zeichnet sich vor allem durch seine Schaumfreiheit aus (Schaumtest: 0 mm/0 mm).

Führt man die Mahlung der Farbstoffsuspension ohne Zusatz von 3,6-Dimethyl-4-octin-3,6-diol durch, so

verdickt das Mahlgut nach ca. 7 Stunden Mahldauer gallertartig und muss durch Zusatz von Wasser verdünnt werden (Viskosität: 9240 cP).

**Beispiel 4**

221,8 Teile eines Mahlslurrys, enthaltend 39,5 Teile Farbstoff der Formel

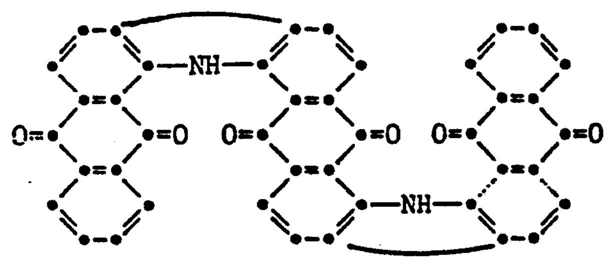

und 11,8 Teile Ligninsulfonat, gemahlen in einer Sandmühle bis zu einer mittleren Teilchengrösse von ca. 1 µm, werden mit 29,5 Teilen Ligninsulfonat als wässrige Lösung (46,7 % Trockengehalt), 60,9 Teilen Naphthalinsulfonsäure-Formaldehydkondensat (wässrige Lösung mit einem Trockengehalt von 42,9 %), 14,1 Teilen Oxyligninsulfonat (92,6 % Trockengehalt) sowie 5,5 Teilen 3,6-Dimethyl-4-octin-3,6-diol und 35,9 Teilen Wasser versetzt und gründlich homogenisiert. Man erhält eine feindisperse Suspension mit einem Feststoffgehalt von ca. 30 %, die nach Passieren eines 18 bis 21 µm Siebes, wie im Beispiel 1 beschrieben, zerstäubungsgetrocknet wird. Zur Entstäubung gibt man anschliessend noch 0,1 % eines Staubbindemittels auf Mineralölbasis zu.
Zusammensetzung des fertigen Präparats:

34,2 % Farbstoff,
22,6 % Naphthalinsulfonsäure-Formaldehydkondensat,
11,3 % Oxyligninsulfonat,
22,1 % Ligninsulfonat,
4,7 % 3,6-Dimethyl-4-octin-3,6-diol (der Gehalt an Acetylen-Glykol liegt etwas unter dem angegebenen Wert, da ein Teil während der Sprühtrocknung verdampft),
0,1 % Staubbindemittel,
ca. 5,0 % Restfeuchte.

Das Präparat zeigt ein brauchbares Anschlämmverhalten. Netzverhalten/Anschlämmbarkeit und Schaumverhalten sowie Redispergierbarkeit lassen sich weiter verbessern, wenn man das Acetylen-Glykol durch Dihexylsulfosuccinat ersetzt und ferner 0,8 % Antischaummittel zufügt. Nach der Sprühtrocknung erhält man ein Präparat folgender Zusammensetzung:

32,9 % Farbstoff,
21,8 % Naphthalinsulfonsäure-Formaldehydkondensat,
10,9 % Oxyligninsulfonat,
ca. 24 % Ligninsulfonat,
ca. 4,6 % Dihexylsulfosuccinat,
ca. 0,8 % Antischaummittel,
ca. 5 % Restfeuchte.

Das Präparat ist schaumarm und gut beretzbar (MKDL Test: 3 bis 5 Min; Schaumtest: 10 mm/0 mm).

**Beispiel 5**

216,3 Teile eines Mahlslurrys, dessen mittlere Teilchengrösse bei ca. 0,9 bis 1 µm liegt und der 38,0 Teile Farbstoff der Formel

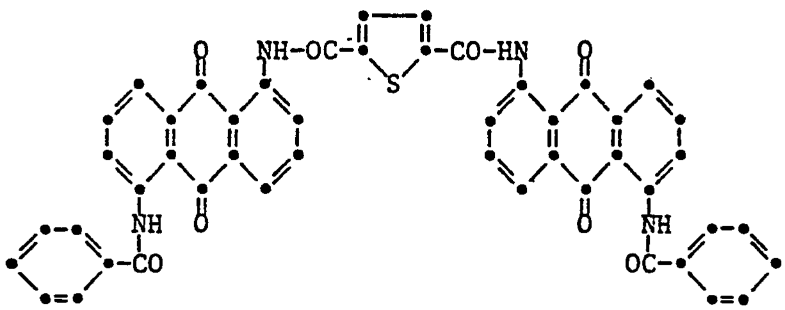

28,5 Teile Naphthalinsulfonsäure-Formaldehydkondensat, sowie 7 Teile Oxyligninsulfonat enthält, werden mit 51,5 Teilen Ligninsulfonat (wässrige Lösung, Trockengehalt 46,6 %), ferner 2,5 Teilen 3,6-Dimethyl-4-octin-3,6-diol und 63 Teilen Wasser versetzt und gut homogenisiert. Man erhält eine feindisperse Suspension mit einem Feststoffgehalt von ca. 30 %, die nach Passieren eines 24 bis 26 µm Siebes zerstäubungsgetrocknet wird und zwar bei einer Lufteintrittstemperatur von 160°C und einer Luftaustrittstemperatur von 80 bis 85°C. Zur Entstäubung werden anschliessend noch 0,14 % Staubbindemittel auf Mineralölbasis zugegeben.
Zusammensetzung des fertigen Präparates:

36,0 % Farbstoff,
27,0 % Naphthalinsulfonsäure-Formaldehyd-Kondensat,
6,6 % Oxyligninsulfonat,
22,8 % Ligninsulfonat,
2,4 % 3,6-Dimethyl-4-octin-3,6-diol,
0,1 % Staubbindemittel,
ca. 5,0 % Restfeuchte.

Der Gehalt an Acetylen-Glykol liegt etwas unter dem angegebenen Wert, da ein Teil während der Sprühtrocknung verdampft.
Das Präparat zeigt ein gutes Anschlämm- und Benetzungsverhalten (MKDL-Test: 5 bis 6 Min.).

**Beispiel 6**

Werden zum im Beispiel 5 erwähnten Mahlgut 7,2 Teile Oxyligninsulfonat und 14,3 Teile Ligninsulfonat (46,4 %ige wässrige Lösung) gegeben, sowie 5 Teile Dihexylsulfosuccinat-Na-Salz (80 %ige wässrig/alkoholische Lösung) und 73,4 Teile Wasser zugefügt, so erhält man nach der Siebung des Mahlslurrys und anschliessender Sprühtrocknung ein Farbstoffpräparat der folgenden Zusammensetzung:

36,39 % Farbstoff,
13,60 % Oxyligninsulfonat,
27,29 % Naphthalinsulfonsäure-Formaldehydkondensat,
13,69 % Ligninsulfonat,
3,83 % Dihexylsulfosuccinat-Na-Salz,
0,2 % Staubbindemittel,
5,0 % Wasser.

Das Präparat hat eine ausgezeichnete Benetzbarkeit/Anschlämmbarkeit und Redispergierbarkeit (MKDL-Test: 3 Min.).

**Beispiel 7**

7800 Teile Farbstoff der Formel

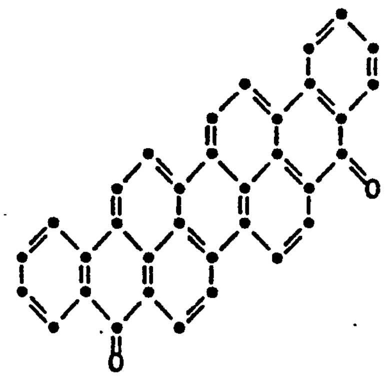

als feuchter Presskuchen mit einem Feststoffgehalt von 27,9 % werden mit 2335 Teilen einer 46,6 %igen wässrigen Ligninsulfonatlösung angerührt und mit einem Leitstrahlmischer vordispergiert. Anschliessend erfolgt eine Feinmahlung (Sandmühle; Durchlaufgeschwindigkeit des Mahlslurrys 22 bis 25 l/Std.). Nach einer Mahldauer von 9 Stunden ist eine mittlere Teilchengrösse von ca. 1 µm erreicht. 230 Teile des dünnflüssigen Mahlguts, enthaltend 48,5 Teile Farbstoff und 24,4 Teile Ligninsulfonat, werden mit 29,6 Teilen einer 44,3 %igen wässrigen Lösung eines Naphthalinsulfonsäure-Formaldehydkondensats, 14,2 Teilen Oxyligninsulfonat (92,6 % Trockengehalt), 5,3 Teilen 3,6-Dimethyl-4-octin-3,6-diol und 2,13 Teilen C.I. Vat Green 1 (C.I.59 825) als Nuancierkomponente, sowie 21,8 Teilen Wasser versetzt und gut durchmischt. Die dünnflüssige Suspension (Trockensubstanzgehalt: 35,2 %) wird gesiebt und zerstäubungsgetrocknet und das so erhaltene feine Pulver mit 0,1 % Staubbindemittel vermischt. Man erhält so ein Farbstoffpräparat der folgenden Zusammensetzung:

43,2 % Farbstoff,
21,7 % Ligninsulfonat,
11,7 % Naphthalinsulfonsäure-Formaldehydkondensat,
11,7 % Oxyligninsulfonat,
4,7 % 3,6-Dimethyl-4-octin-3,6-diol,
1,9 % C.I. Vat Green 1 (C.I. 59 825),
0,1 % Staubbindemittel,
5,0 % Wasser.

Das Präparat zeigt eine gute Benetzbarkeit/Anschlämmbarkeit und Redispergierbarkeit (MKDL-Test: 5 bis 6 Min.) und ein gutes Schaumverhalten (Schaumtest: < 10 mm/baut rasch ab).

Werden anstelle von 5,3 Teilen 3,6-Dimethyl-4-octin-3,6-diol 5,3 Teile Dihexylsulfosuccinat-Na-Salz, sowie 0,8 bis 1 % Antischaummittel zugegeben, so erhält man ein Präparat mit ausgezeichnetem Anschlämmverhalten/Benetzbarkeit (MKDL-Test: 3 Min.) und gutem Schaumverhalten (Schaumtest: < 10 mm/baut rasch ab).

**Beispiel 8**

3071, 3 Teile Rohfarbstoff der Formel

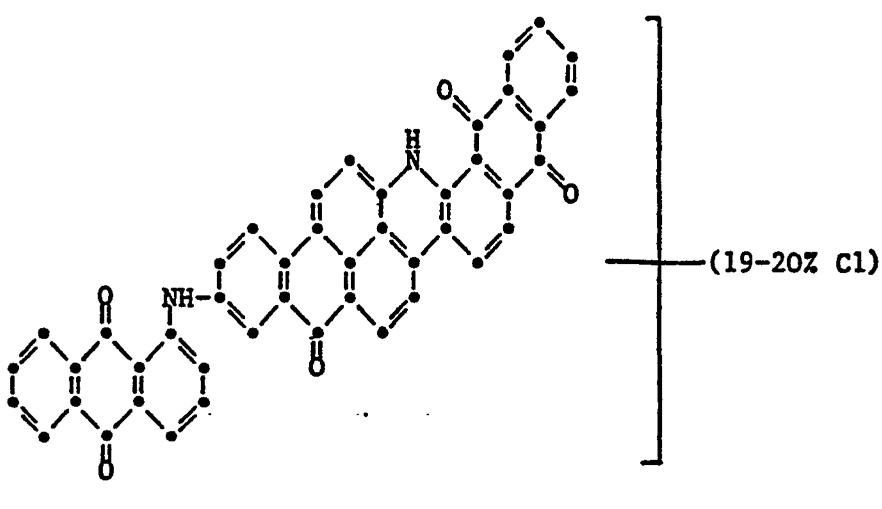

als feuchter Presskuchen mit einem Trockensubstanzgehalt von 16,3 % werden in 292,4 Teilen einer 42,8 %igen wässrigen Lösung eines Naphthalinsulfonsäure-Formaldehydkondensats zusammen mit 136,3 Teilen Oxyligninsulfonat (91,8 % Trockengehalt) angeschlämmt und mit einem Leitstrahlmischer vordispergiert, bis zu einer Teilchengrösse von < 80 bis 100 µm. Anschliessend erfolgt die Feinmahlung, die nach 7 1/4 Stunden beendet ist. Die mittlere Teilchengrösse liegt dann bei < 1 µm. Zu 177 Teilen dieses Mahlguts, enthalterd 26,2 Teile Farbstoff, 6,6 Teile Naphthalinsulfonsäure-Formaldehydkondensat und 6,6 Teile Oxyligninsulfonat, gibt man 77,2 Teile einer 42,8 %igen wässrigen Lösung von Naphthalinsulfonsäure-Formaldehydkondensat, ferner 14,4 Teile Oxyligninsulfonat (91,8 % Trockengehalt), 6 Teile Dihexylsulfosuccinat-Na-Salz, 2 Teile Antischaummittel sowie 6,4 Teile Nuancierfarbstoff (fertiges Präparat) und 80,3 Teile Wasser. Die so erhaltene Suspension wird gründlich durchgemischt, gesiebt und schliesslich sprühgetrocknet (Lufteingangstemperatur 130°C/Luftaustrittstemperatur 60 bis 70°C). Zur Entstäubung wird das trockene Präparat noch mit 0,2 % Staubbindemittel vermischt. Zusammensetzung des Farbstoffpräparats:

25,1 % Farbstoff,
38,0 % Naphthalinsulfonsäure-Formaldehydkondensat,
19,0 % Oxyligninsulfonat,
4,6 % Dihexylsulfosuccinat-Na-Salz,
1,9 % Antischaummittel,
6,2 % Nuancierfarbstoff,
0,2 % Staubbindemittel auf Mineralölbasis,
5,0 % Wasser.

Das Präparat zeigt eine sehr gute Anschlämm-, Benetz- und Redispergierbarkeit (MKDL-Test: 4 Min.) sowie ein gutes Schaumverhalten (Schaumtest: 30 mm/0 mm).

**Beispiel 9:**

220 Teile eines Mahlslurrys, enthaltend 33,59 Teile Farbstoff gemäss Beispiel 4, 12,15 Teile Oxyligninsulfonat (91,6 % Trockengehalt) und 52,53 Teile Naphthalinsulfomsäure-Formaldehydkondensat (wässrige Lösung mit einem Trockengehalt von 42,3 %), erhalten durch Mahlen in eimer Sandmühle bis zu einer mittlerem Teilchengrösse von ca. 1 µm, werden mit 49,91 Teilen Ligninsulfonat (wässrige Lösung mit 43,6 % Trockengehalt), 4,7 Teilen Isopropylnaphthalinsulfonat (als Natriumsalz mit einem Gehalt von 75 %, Rest Natriumsulfat) und 36,7 Teilen Wasser versetzt und gründlich homogenisiert. Man erhält eine feindisperse Suspension mit einem Feststoffgehalt von ca. 30 %, die nach Passieren eines 18 bis 21 µm Siebes, wie im Beispiel 1 beschriebem, zerstäubungsgetrocknet wird. (Lufteintrittstemperatur 150°C, Austrittstemperatur 70-80°C). Zur Entstäubung kann anschliessend noch ca. 0,1 % eines Staubbindemittels auf Mineralölbasis zugegeben werden. Zusammensetzung des fertigen Präparates:

34,2 % Farbstoff
22,6 % Naphthalinsulfonsäure-Formaldehydkondensat
11,3 % Oxyligninsulfonat
22,1 % Ligninsulfonat
4,8 % Isopropylnaphthalinsulfonat, Na-Salz (25 % davon sind $Na_2SO_4$)
5,0 % Wasser

Das Präparat zeigt ein recht gutes Anschlämm- und Netzverhalten (MKDL-Test: 9 Min., wogegen das Vergleichspräparat ohne Isopropylnaphthalinsulfonat 16 Min. aufweist. Beim Vergleichspräparat wurde das Isopropylnaphthalinsulfonat durch Ligninsulfonat ersetzt). Werden bei diesem Präparat 0,8 % eines Antischaummittels zugefügt, so resultiert ein ausgezeichnetes Schaumverhalten. (Schaumtest: 0/0 mm).

Werden anstelle des Isopropylnaphthalinsulfonates 5 % Diisobutylnaphthalinsulfonat Na-Salz (65 % Wirksubstanz, Rest $Na_2SO_4$) zugegeben, so erhält man nach der Zerstäubung ebenfalls eine leicht anschlämmbare feste Handelsform (MKDL-Test: 9 Min.).

Fügt man dem Eindampfslurry auf Kosten des Ligninsulfonates 0,8 bis 1,2 % eines Antischaummittels zu, so zeigt das nach der Zerstäubungstrocknung erhaltene Präparat ein gutes Schaumverhalten (Schaumtest 35/0 mm, wobei der Schaum schon nach 2 Minuten zusammenfällt).

**Beispiel 10:**

Werden anstelle des in Beispiel 9 eingesetzten Isopropylnaphthalinsulfonates 5 % Bis-2-äthylhexylsulfosuccinat (als Na-Salz) eingesetzt, so resultiert ein leicht anschlämmbares Präparat (MKDL-Test: 8 Min.).

Durch Zugabe von 0,8 % Antischaummittel kann das Schaumverhalten verbessert werden. Der sich nach Ansetzen der Färbeflotte bildende Schaum fällt schnell in sich zusammen.

**Beispiel 11:**

210 Teile eines Mahlslurrys, enthaltend 46,1 Teile Farbstoff gemäss Beispiel 7, 13,59 Teile Oxyligninsulfonat (91,6 % Trockengehalt) und 29,43 Teile Naphthalinsulfonsäure-Formaldehydkondensat (wässrige Lösung mit 42,3 % Trockengehalt), gemahlen in einer Sandmühle bis zu einer mittleren Teilchengrösse von ca.0,9-1 µm werden mit 57,89 Teilen Ligninsulfonat (wässrige Lösung mit 43,6 % Trockengehalt), 5,1 Teilen Isopropylnaphthalinsulfonat (Na-Salz, 75 % Aktivsubstanz, Rest Natriumsulfat) und 64,8 Teilen Wasser versetzt und gründlich homogenisiert.

Die dünnflüssige, feindisperse Suspension (Trockensubstanzgehalt 30 %) wird gesiebt und zerstäubungsgetrocknet. (Lufteintrittstemperatur 150° C, Austrittstemperatur 70-80° C).

Anschliessend kann zur Entstäubung noch ca. 0,1 % eines Staubbindemittels auf Mineralölbasis zugegeben werden.

Zusammensetzung des fertigen Präparats:

43,2 % Farbstoff
11,7 % Naphthalinsulfonsäure-Formaldehydkondensat
11,7 % Oxyligninsulfonat
23,6 % Ligninsulfonat
4,8 % Isopropylnaphthalinsulfonat, Na-Salz (enthält 25 % $Na_2SO_4$)
5,0 % Wasser.

Das Präparat ist leicht anschlämmbar (MKDL-Test: 8 Min.) und zeigt ein sehr gutes Schaumverhalten (30/0 mm, wobei der Schaum schon nach 1 Min. zusammenfällt).

Das Vergleichspräparat, bei dem Isopropylnaphthalinsulfonat durch Ligninsulfonat ersetzt wurde, kommt dagegen im MKDL-Test auf 13 Min..

Werden anstelle des Isopropylnaphthalinsulfonates 5 % Diisobutylnaphthalinsulfonat Na-Salz zugegeben, weist das zerstäubungsgetrocknete Präparat ein gutes Anschlämm- und Netzverhalten (MKDL-Test: 5 Min.), sowie ein sehr gutes Schaumverhalten (40/0 mm) auf.

**Beispiel 12:**

Werden anstelle des in Beispiel 11 eingesetzten Isopropylnaphthalinsulfonates (und z.T. auf Kosten des Ligninsulfonates), 5 % Bis-2-äthyl-hexylsulfosuccinat Na-Salz und 1 bis 1,5 % eines Antischaummittels eingesetzt, so erhält man nach der Zerstäubungstrocknung eine feste leicht anschlämmbare Handelsform (MKDL-Test: 7 Min., mit relativ gutem Schaumverhalten, es entsteht ein rasch zusammenfallender Schaum).

**Patentansprüche**

1. Feste Präparate von in Wasser schwerlöslichen bis unlöslichen Farbstoffen, dadurch gekennzeichnet, dass diese neben dem Farbstoff und einem oder mehreren anionischen Dispergiermitteln, sowie gegebenenfalls weiteren, in pulverförmigen Zubereitungen üblicherweise enthaltenen Mitteln, ein Dialkylsulfosuccinat, dessen Alkylgruppen 3 bis 8 Kohlenstoffatome aufweisen oder ein Alkyl-($C_3$-$C_6$)-naphthalinsulfonat und/oder ein verzweigtes oder unverzweigtes Acetylen-Glykol mit 8 bis 20 Kohlenstoffatomen enthalten.

2. Farbstoffpräparate gemäss Anspruch 1, dadurch gekennzeichnet, dass diese 1 bis 15 Gew.%, insbesondere 3 bis 8 Gew.%, Dialkylsulfosuccinat oder Alkylnaphthalinsulfonat und/oder 0,5 bis 12 Gew.%, insbesondere 3 bis 6 Gew.%, Acetylen-Glykol, jeweils bezogen auf das Gesamtgewicht des Präparates, enthalten.

3. Farbstoffpräparate gemäss Anspruch 1, dadurch gekennzeichnet, dass diese als anionisches Dispergiermittel ein Naphthalinsulfonsäure-Formaldehydkondensat, und/oder ein Ligninsulfonat und/oder ein Oxyligninsulfonat enthalten.

4. Farbstoffpräparate gemäss Anspruch 1 dadurch gekennzeichnet dass diese als Dialkylsulfosuccinat das Dipentylsulfosuccinat, insbesondere das Dihexylsulfosuccinat oder das Bis-2-äthyl-hexyl-sulfosuccinat enthalten.

5. Farbstoffpräparate gemäss Anspruch 1, dadurch gekennzeichnet, dass diese als Acetylen-Glykol 2,4,7,9-Tetramethyl-5-decin-4,7-diol, insbesondere 3,6-Dimethyl-4-octin-3,6-diol enthalten.

6. Farbstoffpräparate gemäss Anspruch 1, dadurch gekennzeichnet, dass diese neben einem Naphthalinsulfonsäure-Formaldehydkondensat und/oder einem Ligninsulfonat und/oder einem Oxyligninsulfonat, sowie gegebenenfalls weiteren Zusätzen ein verzweigtes Acetylen-Glykol mit 8 bis 12 Kohlenstoffatomen enthalten.

7. Farbstoffpräparate gemäss Anspruch 1, dadurch gekennzeichnet, dass diese neben einem Naphthalinsulfonsäure-Formaldehydkondensat und/oder einem Ligninsulfonat und/oder einem Oxyligninsulfonat, sowie gegebenenfalls weiteren Zusätzen ein Dialkylsulfosuccinat, dessen Alkylgruppen 3 bis 8 Kohlenstoffatome aufweisen, enthalten.

8. Farbstoffpräparate gemüss Anspruch 1, dadurch gekennzeichnet, dass diese als Farbstoff einen Küpenfarbstoff enthalten.

9. Farbstoffpräparate gemäss Anspruch 1, dadurch gekennzeichnet, dass diese als weitere Zusätze Antischaummittel, Füllstoffe und/oder Staubbindemittel enthalten.

10. Farbstoffpräparate gemäss Anspruch 1, enthaltend

25 bis 65 Gew.% Farbstoff,
20 bis 60 Gew.% Gemisch anionischer Dispergatoren,
1 bis 15 Gew.% Dialkylsulfosuccinat und/oder
0,5 bis 12 Gew.% Acetylen-Glykol, sowie gegebenenfalls
0,1 bis 20 Gew.% weitere Zusätze.

11. Verfahren zur Herstellung der Farbstoffpräparate gemäss Anspruch 1, dadurch gekennzeichnet, dass man den Farbstoff unter Zusatz eines oder mehrerer anionischer Dispergiermittel in Wasser suspendiert, anschliessend auf eine mittlere Teilchengrösse von $\leqslant$ 5 µm heruntermahlt und die wässrige Dispersion trocknet, wobei die restlichen Komponenten vor, während oder nach dem Mahlprozess zugegeben werden.

12. Verfahren gemäss Anspruch 11, dadurch gekennzeichnet, dass man die wässrige Farbstoffdispersion durch Sprühtrocknen in ein Granulat überführt.

13. Verwendung der Farbstoffpräparate gemäss Anspruch 1 zum Färben und Bedrucken von natürlichen oder synthetischen Fasermaterialien.

**Claims**

1. A solid formulation of a dye which is insoluble or sparingly soluble in water, which formulation contains a dialkyl sulfosuccinate having 3 to 8 carbon atoms in each alkyl moiety, or a $C_3$-$C_6$-alkylnaphthalenesulfonate and/or a branched or unbranched acetylene glycol containing 8 to 20 carbon atoms, in addition to the dye and one or more anionic dispersants, optionally together with further auxiliaries conventionally employed in powdered formulations.

2. A dye formulation according to claim 1, which contains 1 to 15 % by weight, preferably 3 to 8 % by weight, of a dialkyl sulfosuccinate or alkylnaphthalenesulfonate, and/or 0.5 to 12 % by weight, preferably 3 to 6 % by weight, of an acetylene glycol, in each case based on the total weight of said formulation.

3. A dye formulation according to claim 1, wherein the anionic dispersant is a naphthalenesulfonic acid/formaldehyde condensate, and/or a lignosulfonate and/or an oxylignosulfonate.

4. A dye formulation according to claim 1, wherein the dialkyl sulfosuccinate is dipentyl sulfosuccinate, preferably dihexyl sulfosuccinate, or bis(2-ethylhexyl) sulfosuccinate.

5. A dye formulation according to claim 1, wherein the acetylene glycol is 2,4,7,9-tetramethyl-5-decyne-4,7-diol, preferably 3,6-dimethyl-4-octyne-3,6-diol.

6. A dye formulation according to claim 1, which contains a branched acetylene glycol of 8 to 12 carbon atoms, in addition to containing a naphthalenesulfonic acid/formaldehyde condensate and/or a lignosulfonate and/or an oxylignosulfonate, optionally together with other auxiliaries.

7. A dye formulation according to claim 1, which contains a dialkyl sulfosuccinate in which each alkyl moiety contains 3 to 8 carbon atoms, in addition to containing a naphthalenesulfonic acid/formaldehyde condensate and/or a lignosulfonate and/or an oxylignosulfonate, optionally together with other auxiliaries.

8. A dye formulation according to claim 1, wherein the dye is a vat dye.

9. A dye formulation according to claim 1, which contains an antifoam, a filler and/or a dust inhibitor as further auxiliaries.

10. A dye formulation according to claim 1, which contains

25 to 65 %, by weight of dye,
20 to 60 %, by weight of a mixture of anionic dispersants,
1 to 15 %, by weight of a dialkyl sulfosuccinate and/or
0.5 to 12 %, by weight of an acetylene glycol, and optionally
0.1 to 20 %, by weight of further auxiliaries.

11. A process for the preparation of a dye formulation as claimed in claim 1, which comprises suspending the dye in water with the addition of one or more anionic dispersants, then grinding the suspension so obtained to an average particle size of ⩽ 5 µm and drying the aqueous dispersion, the remaining components being added before, during or after the grinding operation.

12. A process according to claim 11, which comprises converting the aqueous dye dispersion into a granular formulation by spray dyeing.

13. A process for dyeing or printing natural or synthetic fibre materials, which comprises the use of a dye formulation as claimed in claim 1.

**Revendications**

Préparations tinctoriales solides à base de colorants difficilement solubles à insolubles dans l'eau, caractérisées en ce qu'elles contiennent, en plus du colorant et d'un ou plusieurs dispersants anioniques, ainsi qu'éventuellement d'autres agents contenus habituellement dans des préparations pulvérulentes, un dialkylsulfosuccinate dont les groupes alkyle comportent de 3 à 8 atomes de carbone, ou un alkyl ($C_3$-$C_6$)-naphtalènesulfonate et/ou un acétylène-glycol ramifié ou non ramifié, ayant de 8 à 20 atomes de carbone.

2. Préparations tinctoriales selon la revendication 1, caractérisées en ce qu'elles contiennent de 1 à 15 % en poids, en particulier de 3 à 8 % en poids, de dialkylsulfosuccinate ou d'alkylnaphtalènesulfonate et/ou 0,5 à 12 % en poids, en particulier 3 à 6 % en poids d'acétylèneglycol, dans chaque cas par rapport au poids total de la préparation.

3. Préparations tinctoriales selon la revendication 1, caractérisées en ce qu'elles contiennent en tant que dispersant anionique un produit de condensation d'acide naphtalènesulfonique et de formaldéhyde, et/ou un ligninesulfonate et/ou un oxyligninesulfonate.

4. Préparations tinctoriales selon la revendication 1, caractérisées en ce qu'elles contiennent en tant que dialkylsulfosuccinate le dipentylsulfosuccinate, en particulier le dihexylsulfosuccinate ou le bis-2-éthyl-hexylsulfosuccinate.

5. Préparations tinctoriales selon la revendication 1, caractérisées en ce qu'elles contiennent en tant qu'acétylène-glycol le 2,4,7,9-tétraméthyl-5-décyne-4,7-diol, en particulier le 3,6-diméthyl-4-octyne-3,6-diol.

6. Préparations tinctoriales selon la revendication 1, caractérisées en ce qu'elles contiennent, en plus d'un produit de condensation d'acide naphtalènesulfonique et de formaldéhyde et/ou d'un ligninesulfonate et/ou d'un oxyligninesulfonate, ainsi qu'éventuellement d'autres additifs, un acétylène-glycol ramifié ayant de 8 à 12 atomes de carbone.

7. Préparations tinctoriales selon la revendication 1, caractérisées en ce qu'elles contiennent, en plus d'un produit de condensation d'acide naphtalènesulfonique et de formaldéhyde et/ou d'un ligninesulfonate et/ou d'un oxyligninesulfonate, ainsi qu'éventuellement d'autres additifs, un dialkylsulfosuccinate dont les groupes alkyle comportent de 3 à 8 atomes de carbone.

8. Préparations tinctoriales selon la revendication 1, caractérisées en ce qu'elles contiennent en tant que colorant un colorant de cuve.

9. Préparations tinctoriales selon la revendication 1, caractérisées en ce qu'elles contiennent en tant qu'autres additifs, des agents anti-mousse, des charges et/ou des agants anti-poussière.

10. Préparations tinctoriales selon la revendication 1, contenant

25 à 65 % en poids de colorant,
20 à 60 % en poids d'un mélange de dispersants anioniques,
1 à 15 % en poids d'un dialkylsulfosuccinate et/ou
0,5 à 12 % en poids d'un acétylène-glycol, ainsi qu'éventuellement
0,1 à 20 % en poids d'autres additifs.

11. Procédé pour l'obtention des préparations tinctoriales selon la revendication 1, caractérisé par le fait que l'on met en suspension le colorant dans de l'eau avec addition d'un ou plusieurs dispersants anioniques, on le broie ensuite à une taille moyenne de particules ⩽ 5 µm, puis on sèche la dispersion aqueuse, les autres composants étant ajoutés avant, pendant ou après le processus de broyage.

12. Procédé selon la revendication 11, caractérisé par le fait que l'on transforme la dispersion aqueuse du colorant en un produit granulé, par séchage par pulvérisation.

13. Utilisation des préparations tinctoriales selon la revendication 1, pour la teinture et l'impression de matériaux fibreux naturels ou synthétiques.